# EUROPÄISCHE PATENTSCHRIFT

(11) **EP 1 920 283 B1**
(45) Veröffentlichungstag und Bekanntmachung des Hinweises auf die Patenterteilung: **14.10.2009**
(21) Anmeldenummer: 06777906.6
(22) Anmeldetag: 21.07.2006
(51) Int. Cl.: G02B 7/00, G02B 7/02, G02B 27/00

(54) **TEMPERATURKOMPENSATION OPTISCHER SYSTEME**
TEMPERATURE COMPENSATION OF OPTICAL SYSTEMS
COMPENSATION THERMIQUE DE SYSTEMES OPTIQUES

(30) Priorität: 22.08.2005 DE 102005039561
(43) Veröffentlichungstag der Anmeldung: 14.05.2008
(73) Patentinhaber: ROBERT BOSCH GMBH, 70442 Stuttgart (DE)
(72) Erfinder: FRANZ, Gerald, 71522 Backnang (DE)
(86) Internationale Anmeldenummer: PCT/EP2006/064538
(87) Internationale Veröffentlichungsnummer: WO 2007/023052

(56) Entgegenhaltungen:
- US-A- 4 919 519
- US-A1- 2004 114 473
- US-A1- 2005 030 438
- PATENT ABSTRACTS OF JAPAN Bd. 1997, Nr. 08, 29. August 1997 (1997-08-29) -& JP 09 090273 A (MATSUSHITA ELECTRIC IND CO LTD), 4. April 1997 (1997-04-04)

## Beschreibung

Die Erfindung betrifft ein optisches System mit einer Temperaturkompensation mittels mindestens eines Kompensationselements. Derartige optische Systeme lassen sich, beispielsweise in Form von Kamerasystemen, insbesondere im Automobilbereich einsetzen.

### Stand der Technik

Im Automobilbereich kommen in zunehmendem Maße optische Systeme zum Einsatz. Dabei sind beispielsweise eine Innen- und/oder Außenraumbeobachtung mittels verschiedener Kamerasysteme zu nennen oder beispielsweise auch Abstandssensoren oder Sichtweitensysteme.

Optische Systeme, beispielsweise Fixfokus-Videoanwendungen, unterliegen jedoch im Automobilbereich extremen Temperaturanforderungen. Typische Temperaturbereiche, innerhalb derer die Systeme einwandfrei funktionieren müssen, liegen zwischen -40°C und 120°C. Aufgrund dieser extremen Temperaturbereiche tritt oftmals eine starke Dimensionsänderung der in diesen optischen Systemen enthaltenen mechanischen und/oder optischen Komponenten auf. Insbesondere ist hier eine Längenänderung und/oder eine Vergrößerung der Durchmesser von Linsensitzen sowie optischer Komponenten wie zum Beispiel Linsen oder Filtern zu nennen. So ändern sich beispielsweise bei bildgebenden optischen Komponenten häufig Abstände zwischen einzelnen Linsen und einem bildgebenden Sensor. Somit verändert sich auch die Abbildungseigenschaft dieser Systeme, was sich insbesondere bei kurzbrennweitigen Optiken mit großer numerischer Apertur bemerkbar macht. Primär ändert sich dabei der Zustand der Fokussierung des Systems. Sekundär wird auch die Abbildungsleistung abnehmen, was beispielsweise auf eine Zunahme von Aberrationen (insbesondere von Öffnungsfehlern und/oder Coma) zurückzuführen ist.

Aus dem Stand der Technik sind daher optische Systeme bekannt, welche derartigen Dimensionsänderungen von optischen Systemen aufgrund von Temperaturschwankungen entgegenwirken sollen. So offenbart DE 102 61 973 A1 ein optisches System für eine Kamera, welches aus mindestens einer Linse, einem Bildsensor und einem Tubus besteht. Die Linse und der die Linse und den Bildsensor haltende Tubus sind aus Kunststoff hergestellt, und der Bildsensor ist in der Fokusebene der Linse angeordnet. Zumindest für einen Teilbereich des Tubus ist ein Material vorgesehen, das einen auf das Material der Linse abgestimmten thermischen Ausdehnungskoeffizienten aufweist, dergestalt, dass eine durch Temperaturänderungen bedingte Änderung der Linsenbrennweite durch eine thermische Längenänderung des Tubus dahingehend kompensiert wird, dass der vom Tubus gehaltene Bildsensor in einem bestimmten Temperaturbereich immer zumindest nahezu in der Fokusebene angeordnet ist.

Aus JP 58-7109A ist ein Temperatur-Kompensator bekannt, welcher zur Kompensation von temperaturbedingten Verschiebungen der Bildebene in Videokameras mit Kunststoftlinsen eingesetzt wird. Dabei wird ein Bildaufnahmesensor mit einem Linsenhalter über ein Kunststoffmaterial verbunden, welches eine Dicke entsprechend der Brennweite des Linsensystems aufweist. Dadurch lässt sich eine Verschiebung der Bildebene aufgrund von Temperaturschwankungen kompensieren.

Die aus dem Stand der Technik bekannten Systeme weisen jedoch in der Praxis eine Reihe von Nachteilen auf. So stellt insbesondere eine Auswahl geeigneter Materialien sowie eine entsprechende Dimensionierung der Systeme eine hohe Anforderung an die konstruktive Ausgestaltung. Wird, beispielsweise aufgrund eines Designwechsels, das optische System konstruktiv verändert, so müssen die Dimensionierungen der Kompensationselemente unmittelbar mit angepasst werden. Hierzu ist in der Regel eine Änderung der mechanischen Dimensionierung und/oder eine Änderung der Materialien der Kompensationselemente erforderlich, was in vielen Fällen eine vollständige Umgestaltung des Designs der optischen Systeme erforderlich macht.

Weiterhin sind die bekannten Systeme von ihrem Aufbau häufig sehr komplex und somit aufwendig und teuer. So weisen derartige Systeme häufig gefaltete Strahlengänge und/oder gestapelte oder überlappende Elemente zur Kompensation auf, wie beispielsweise in DE 102 61 973 A1.

Ein weiterer Nachteil besteht darin, dass die bekannten Systeme zur Temperaturkompensation bei den oben beschriebenen Temperaturänderungen innerhalb extremer Bereiche häufig mechanische Spannungen aufweisen, beispielsweise am Übergang zwischen den einzelnen Elementen der Temperaturkompensation. Diese mechanischen Spannungen können zum einen zur Beschädigung der Komponenten oder Systeme führen. Zum anderen tragen diese Spannungen ihrerseits jedoch auch zur Verschlechterung optischer Eigenschaften bei, da sich beispielsweise Spannungen schlagartig abbauen können, wodurch sich beispielsweise Abbildungseigenschaften der optischen Systeme spontan und unvorhersehbar ändern.

### Vorteile der Erfindung

Es wird daher ein optisches System nach Anspruch 1 vorgeschlagen, welches die Nachteile der oben beschriebenen, aus dem Stand der Technik bekannten Systeme ganz oder teilweise vermeidet. Das optische System ist somit insbesondere für den Einsatz im Automobilbereich geeignet, lässt sich jedoch auch in nahezu allen anderen Bereichen der Technik und Naturwissenschaften einsetzen. Unter einem "optischen System" kann dabei ein beliebiges System verstanden werden, bei welchem Informationen (zum Beispiel in Form von Bildern, Lichtsignalen oder ähnlichem) auf optischem Wege, d.h. unter Ausnutzung elektromagnetischer Wellen im sichtbaren, ultravioletten oder infraroten Spektralbereich, gesammelt und/oder übertragen werden sollen. Beispiele derartiger Systeme sind Kamerasysteme, beispielsweise Videokamerasysteme. Weiterhin sollen unter optischen Systemen auch Teilsysteme verstanden werden, beispielsweise Linsensysteme, welche zu einem oder mehreren Objektiven oder anderen bildgebenden Systemen zusammengefasst sind.

Ein Grundgedanke der vorliegenden Erfindung besteht darin, wie auch im Stand der Technik, zur Kompensation mindestens einer temperaturbedingten Dimensionsänderung Aus der US 2004/0114473 A1 ist ein Verfahren und eine Vorrichtung zur Speicherung und Wiedergabe von Informationen mittels eines optischen Datenspeichers bekannt,
wobei ein Lesekopf einen Kompensator umfasst. Die US 4,919,519 B1 offenbart ein System zur einstellbaren Positionierung eines Objektivs als Funktion der Temperatur des Objektivs mittels einer in einem Behälter aufgenommenen Flüssigkeit. Aus der US 2005/0030438 A1 ist optisches Element bekannt, bei dem optische Eigenschaften, wie die Brennweite, einstellbar sind. Die JP 09090273 offenbart eine Einrichtung zur Einstellung der Fokussierung. des optischen Systems, welche insbesondere zu einer Veränderung von Abbildungs- und/oder Bildgebungseigenschaften führen kann, mindestens ein Kompensationselementeinzusetzen. Im Gegensatz zu bekannten Anordnungen weist dieses mindestens eineKompensationselement erfindungsgemäß jedoch mindestens ein in mindestens einerDimension längenänderbares Gehäuse sowie mindestens ein in dem mindestens einen Gehäuse aufgenommenes fluides Expansionsmedium auf.

Die längenänderbare Eigenschaft des mindestens einen Gehäuses lässt sich erfindungsgemäß auf verschiedene Weisen verwirklichen. So kann beispielsweise das längenänderbare Gehäuse einen teleskopartig längenänderbaren Gehäuseteil aufweisen. Alternativ oder zusätzlich kann das längenänderbare Gehäuse ganz oder teilweise aus Kunststoffmaterialien, beispielsweise Elastomeren oder Thermoplasten, hergestellt sein und kann in mindestens einer Dimension flexible und/oder plastische Eigenschaften aufweisen. Dabei sind flexible Eigenschaften bevorzugt, da diese gewährleisten, dass die thermische Längenänderung des Gehäuses reversibel erfolgt. In einer bevorzugten Ausgestaltung werden die längenänderbaren Eigenschaften des mindestens einen Gehäuses in mindestens einer Dimension durch Verwendung eines Wellschlauches erzeugt, beispielsweise eines Wellschlauches oder Wellbalgs aus metallischen Materialien und/oder Kunststoffmaterialien.

Weiterhin kann das mindestens eine längenänderbare Gehäuse mindestens zwei planparallele Stirnflächen aufweisen. In diesem Fall ist es vorteilhaft, wenn das Gehäuse in einer Richtung senkrecht zu diesen planparallelen Stirnflächen längenänderbar ist. Diese Ausgestaltung der Erfindung gewährleistet, dass die thermische Kompensation insbesondere definiert in dieser Richtung senkrecht zu den planparallelen Stirnflächen erfolgt. Eine Verkippung der planparallelen Stirnflächen gegeneinander infolge von thermischen Längenänderungen kann dabei weitgehend vermieden werden.

Erfindungsgemäß besteht ein wesentlicher Freiheitsgrad des vorgeschlagenen optischen Systems in der Wahl des fluiden Expansionsmediums. Unter einem "fluiden Expansionsmedium" kann dabei eine Flüssigkeit oder auch ein Gas verstanden werden, wobei erfindungsgemäß eine Flüssigkeit bevorzugt wird. Vorzugsweise wird diese Flüssigkeit blasenfrei in das mindestens eine längenänderbare Gehäuse eingefüllt, dergestalt, dass das mindestens eine längenänderbare Gehäuse die Flüssigkeit dicht einschließt.

Wahlweise können dabei eine oder mehrere Flüssigkeiten verwendet werden, als Einzelflüssigkeit oder auch als Flüssigkeitsgemisch. In der Praxis hat sich dabei insbesondere Wasser, Alkohol (insbesondere Ethanol) sowie eine Mischung dieser Flüssigkeiten als besonders geeignet erwiesen. Es lassen sich jedoch auch andere Flüssigkeiten oder Flüssigkeitsgemische, z. B. Mischungen von polaren und unpolaren Flüssigkeiten, einsetzen. Insbesondere lassen sich durch Einstellungen von Mischungsverhältnissen auch die thermischen Expansionseigenschaften des fluiden Expansionsmediums (insbesondere einer Flüssigkeitsmischung) präzise einstellen. Insgesamt ist es von Vorteil, wenn das mindestens eine fluide Expansionsmedium einen höheren thermischen Ausdehnungskoeffizienten, insbesondere einen höheren thermischen Volumenausdehnungskoeffizienten aufweist als die übrigen, in dem optischen System verwendeten Werkstoffe, insbesondere als diejenigen Werkstoffe, welche beispielsweise zur Halterung optischer Komponenten und/oder zur Beabstandung optischer Komponenten (zum Beispiel Linsen) zu entsprechenden bildgebenden Systemen (zum Beispiel CCD-Chips) verwendet werden. Auf diese Weise ist sichergestellt, dass auch mit kleinvolumigen Kompensationselementen eine Kompensation von thermisch bedingten Längenänderungen von zum Beispiel größeren Objektivfassungen oder ähnlichem der optischen Systeme kompensiert werden kann.

Weiterhin kann das optische System mindestens ein Temperierelement aufweisen, welches ausgestaltet ist, um mindestens eine Temperatur des mindestens einen fluiden Expansionsmediums einzustellen und/oder mindestens eine Temperatur des mindestens einen fluiden Expansionsmediums zu regeln. Beispielsweise kann das mindestens eine Temperierelement mindestens ein Heizelement (z. B. einen Heizwiderstand) aufweisen, über welches das fluide Expansionsmedium aufgeheizt wird. Die Aufheizung kann beispielsweise geregelt erfolgen, z. B. mittels eines einfachen Temperaturreglers. Neben einem einfachen Heizelement kann auch beispielsweise ein Kühlelement oder ein Heiz/Kühlelement verwendet werden, beispielsweise ein Peltierelement. So kann die Temperatur des fluiden Expansionsmediums gezielt und weitgehend unabhängig von der Umgebungstemperatur eingestellt werden, um eine temperaturbedingte Dimensionsänderung des optischen Systems zu kompensieren. Auf diese Weise ist eine gezielte aktive Nachfokussierung möglich.

Insbesondere wird erfindungsgemäß ein optisches System nach Anspruch 1 vorgeschlagen, welches mindestens ein Kamerasystem aufweist. Dieses mindestens eine Kamerasystem soll mindestens eine Kamerabasis und mindestens ein an die mindestens eine Kamerabasis angebundenes bildgebendes System mit mindestens, einer optischen Achse aufweisen. Insbesondere kann dieses mindestens eine bildgebende System ein Objektiv umfassen. Weiterhin soll das erfindungsgemäße Kamerasystem mindestens einen Bildgebungssensor aufweisen, beispielsweise einen CCD-Chip.

Dabei ist das mindestens eine Kamerasystem derart ausgestaltet, dass der mindestens eine Bildgebungssensor mit der mindestens einen Kamerabasis über das mindestens eine Kompensationselement verbunden ist. Insbesondere kann das Kompensationselement dabei, wie oben beschrieben, mit zwei planparallelen Flächen ausgestattet sein, welche vorzugsweise senkrecht zu der mindestens einen optischen Achse angeordnet sind. Das mindestens eine längenänderbare Gehäuse des mindestens einen Kompensationselements soll parallel zur optischen Achse längenänderbar sein.

Somit wird erfindungsgemäß das Kompensationselement genutzt, um den mindestens einen Bildgebungssensor derart zu dem bildgebende System, insbesondere zu dem Objektiv, zu verschieben, dass die temperaturbedingte Defokussierung durch das mindestens eine Kompensationselement wieder ausgeglichen wird. Zusätzlich kann, ähnlich zur Ausgestaltung in DE 102 61 973 A1, auch das bildgebende System mit mindestens einem Kompensationselement verbunden werden, dergestalt, dass das bildgebende System relativ zum Bildgebungssensor verschoben wird, um die temperaturbedingte Defokussierung auszugleichen.

Das erfindungsgemäße optische System in einer der beschriebenen Ausgestaltungen weist gegenüber dem Stand der Technik zahlreiche Vorteile auf. Diese Vorteile sind insbesondere durch die Verwendung des fluiden Expansionsmediums bedingt. Diese Verwendung bietet konstruktiv gut nutzbare Freiheitsgrade, da beispielsweise durch Befüllung mit passenden Flüssigkeiten oder Flüssigkeitsmischungen eine Abstimmung der Längenausdehnung des Kompensationselements ohne eine konstruktive Änderung des optischen Systems möglich ist. Im Gegensatz zu den aus dem Stand der Technik beschriebenen Systemen bedeutet somit eine Designänderung, beispielsweise durch Verwendung eines neuen bildgebenden Systems (zum Beispiel eines Objektivs) nicht notwendigerweise eine vollständige konstruktive Umgestaltung des optischen Systems, insbesondere der Kamera, zum Zweck der Temperaturkompensation. Es kann vielmehr erfindungsgemäß einfach das fluide Expansionsmedium gegen ein alternatives, angepasstes fluides Expansionsmedium ausgetauscht werden.

Ein weiterer Vorteil besteht darin, dass fluide Expansionsmedien im Gegensatz zu festen Material keine inneren Spannungen aufbauen. Somit kommt es zu keiner unerwünschten ungleichmäßigen Längenausdehnung des Kompensationselements, was bei den aus dem Stand der Technik bekannten Systemen beispielsweise zu Verspannungen oder Neigungen (Verkippungen) der optischen Systeme führen kann. Durch konvektive Wärmeleitung stellt sich weiterhin in einem mit einem fluiden Expansionsmedium gefüllten Kompensationselement schneller ein thermisches Gleichgewicht ein als in einem Festkörper. Somit reagiert das erfindungsgemäße optische System schneller auf Temperaturänderungen als entsprechende konventionelle Systeme.

Zudem ist bei den erfindungsgemäßen Systemen kein Aufbau gefalteter Strahlengänge oder einer gestapelten Temperaturkompensation erforderlich, was - wie oben beschrieben - die aus dem Stand der Technik bekannten Temperaturkompensationssysteme unhandlich und teuer macht. Somit ist das erfindungsgemäße optische System konstruktiv einfach auszugestalten und somit kostengünstig und einfach zu montieren. Es lassen sich jedoch auch optische Systeme herstellen, bei welchen ein erfindungsgemäß vorgeschlagenes Kompensationselement mit einem fluiden Expansionsmedium mit "konventionellen" Kompensationselementen, insbesondere Festkörper-Kompensationselementen, kombiniert wird.

### Zeichnung

Anhand der Zeichnung wird die Erfindung nachstehend näher erläutert.

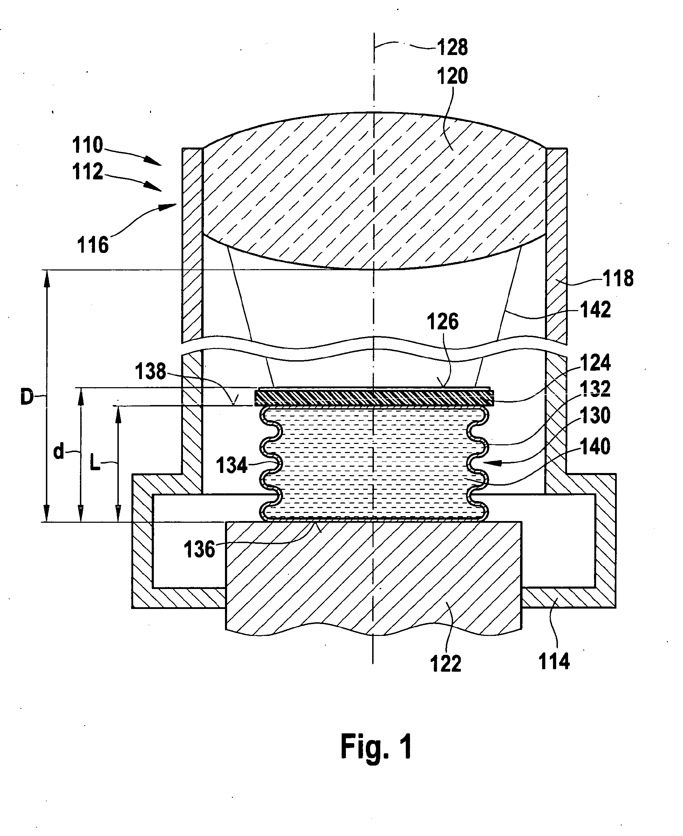

Die einzige Figur (Figur 1) zeigt ein Ausführungsbeispiel eines temperaturkompensierten optischen Systems in Form eines Kamerasystems in einer Prinzipdarstellung.

### Ausführungsbeispiel

In der einzigen Figur (Figur 1) ist ein erfindungsgemäßes Ausführungsbeispiel eines optischen Systems 110 in Form eines Kamerasystems 112 schematisch dargestellt. Das Kamerasystem umfasst ein Kameragehäuse 114, wobei alternativ auch ungekapselte Kamerasysteme 112 eingesetzt werden können, also Kamerasysteme 112 ohne Kameragehäuse 114.

Das Kamerasystem 112 weist ein bildgebendes System 116 in Form eines Objektivs auf. Dieses bildgebende System 116 ist in Figur 1 nur symbolisch dargestellt und umfasst ein Objektivgehäuse 118 und ein Linsensystem 120. Von dem Linsensystem 120 ist lediglich die letzte, dem Kameragehäuse 114 zugewandte Linse dargestellt. Es können jedoch auch komplexere Linsensysteme vorhanden sein sowie andere optische Komponenten, beispielsweise Kombinationen aus Linsen und Filtern. Das Linsensystem 120 ist in der Regel fest mit dem Objektivgehäuse 118 verbunden.

Weiterhin weist das Kamerasystem 112 eine in dem Kameragehäuse 114 aufgenommene Kamerabasis 122 auf. Diese Kamerabasis 122 kann beispielsweise eine Grundplatte aufweisen, kann Bestandteil des Kameragehäuses 114 sein oder kann eine in das Kameragehäuse 114 aufgenommene Leiterplatte umfassen.

Auf der Kamerabasis ist ein Bildgebungssensor 124 aufgenommen, welcher mit seiner bildsensitiven Oberfläche 126 dem Linsensystem 120 zuweist. Der Bildgebungssensor 124 ist mit seiner bildsensitiven Oberfläche 126 im Wesentlichen senkrecht zu einer optischen Achse 128 des bildgebenden Systems 116 angeordnet. Dabei sind je nach Anwendung bestimmte Abweichungen von der Senkrechten tolerierbar, beispielsweise Abweichungen von nicht mehr als 3°.

Zwischen dem Bildgebungssensor 124 und der Kamerabasis 122 ist ein Kompensationselement 130 angeordnet, welches Bildgebungssensor 124 und Kamerabasis 122 verbindet. Dieses Kompensationselement 130 weist ein Gehäuse 132 auf. Dieses Gehäuse 132 verfügt über eine Seitenwand parallel zur optischen Achse 128 in Form eines Wellschlauchs 134. Dieser Wellschlauch 134 kann beispielsweise aus Edelstahl, Kupfer oder Messing oder aus anderen geeigneten Feststoffen gefertigt sein. Weiterhin weist das Gehäuse 132 zwei planparallele, zur optischen Achse 128 senkrecht ausgerichtete Stirnflächen 136, 138 auf. Diese planparallelen Stirnflächen 136, 138 verschließen den Wellschlauch 134 an der Unter- beziehungsweise Oberseite hermetisch (also insbesondere flüssigkeits- oder gasdicht), beispielsweise durch ein Verlöten mit dem Wellschlauch 134.

In das Gehäuse 132 ist ein fluides Expansionsmedium 140 eingebracht, wobei es sich in diesem Ausführungsbeispiel um eine bezüglich dem Gehäuse 132 inerte Flüssigkeit handelt. Neben Reinstoffen bieten sich hier insbesondere Mischungen verschiedener Flüssigkeiten an, beispielsweise eine Ethanol-Wasser-Mischung.

Das bildgebende System 116 bildet einen Gegenstand auf die bildsensitive Oberfläche 126 des Bildgebungssensors 124 ab. Diese Abbildung ist in Figur 1 symbolisch mit der Bezugsziffer 142 bezeichnet. Beispielsweise wird die bildsensitive Oberfläche 126 gerade so positioniert, dass diese für eine scharfe Abbildung eines Gegenstandes in der Bildebene (Brennebene im Falle eines unendlichen Objektabstandes) des bildgebenden Systems 116 liegt.

Infolge von Temperaturunterschieden ist jedoch die Dimensionierung des Kameragehäuses 114 und des bildgebenden Systems 116 nicht starr. Vielmehr dehnt sich das Objelctivgehäuse 118 und das Kameragehäuse 114 beispielsweise infolge einer Temperaturerhöhung aus. Auch das Linsensystem 120 kann sich in seinen optischen Eigenschaften und/oder in seiner Dimensionierung verändern. Dementsprechend ist der Abstand D zwischen der Kamerabasis 122 und dem Linsensystem 120 von der Temperatur abhängig. Bei einer temperaturbedingten Ausdehnung verändert sich D. Ohne Temperaturkompensation würde somit bei einer derartigen Temperaturerhöhung die Bildebene des Linsensystems 120 somit oberhalb der bildsensitiven Oberfläche 126 liegen, was zu einer verminderten Abbildungsqualität (zum Beispiel einer Bildunschärfe) führen würde.

Das Kompensationselement 130 ist jedoch derart aufgebaut, dass sich bei Temperaturänderungen auch das fluide Expansionsmedium 140 entsprechend seinem Volumenausdehnungskoeffzienten ausdehnt. Entsprechend wird sich die Länge L des Wellschlauchs 134 aufgrund der Flexibilität des Wellschlauchs 134 ändern. Bei einer Temperaturerhöhung dehnt sich somit das Kompensationselement 130 aus, so dass auch der Abstand zwischen Kamerabasis 122 und bildsensitiver Oberfläche 126 ansteigt.

Bei einer entsprechenden Auswahl des fluiden Expansionsmediums 140 und einer entsprechenden Dimensionierung des Gehäuses 132 kann eine Temperaturkompensation der Vergrößerung des Abstandes D erfolgen, indem der Abstand d entsprechend angepasst wird. Diese Temperaturkompensation ist üblicherweise nicht für alle möglichen Temperaturen vollständig erreicht. Durch eine geeignete Auswahl des fluiden Expansionsmediums 140, beispielsweise durch eine entsprechende Einstellung des Ethanol-Wasser-Mischverhältnisses, kann jedoch die Temperaturkompensation so gestaltet werden, dass für eine bestimmte Temperaturänderung die Defokussierung des optischen Systems gerade wieder ausgeglichen wird. Dies bedeutet, dass sich d um den gleichen Betrag vergrößert (gegenüber einer Referenztemperatur) wie D. Das gesamte optische System 110 wird also mindestens bei dieser erhöhten Temperatur und bei der Referenztemperatur (welche beispielsweise die Raumtemperatur sein kann) korrekt fokussiert sein, also bei zwei Temperaturen, so dass das bildgebende System 116 einen Gegenstand korrekt auf die bildsensitive Oberfläche 126 abbildet.

## Patentansprüche

1. Optisches System (110), aufweisend mindestens ein Kamerasystem (112), insbesondere für den Einsatz im Automobilbereich, wobei das mindestens eine Kamerasystem (112) mindestens eine Kamerabasis (122), mindestens ein bildgebendes System (116) mit mindestens einer optischen Achse (128), insbesondere ein Objektiv, mindestens einen Bildgebungssensor (124) und mindestens ein Kompensationselement (130) zur Kompensation mindestens einer temperaturbedingten Dimensionsänderung des Kamerasystems (112) aufweist, wobei das mindestens eine Kompensationselement (130) mindestens ein in mindestens einer Dimension längenänderbares Gehäuse (132) sowie mindestens ein in dem mindestens einen Gehäuse (132) aufgenommenes fluides Expansionsmedium (140) aufweist, wobei das mindestens eine längenänderbare Gehäuse (132) des mindestens einen Kompensationselements (130) parallel zur optischen Achse (128) längenänderbar ist **dadurch gekennzeichnet, dass** der mindestens eine Bildgebungssensor (124) mit der mindestens einen Kamerabasis (122) über das mindestens eine Kompensationselement (130) verbunden ist.

2. Optisches System (110) gemäß Anspruch 1, **dadurch gekennzeichnet, dass** das mindestens eine längenänderbare Gehäuse (132) in einer Dimension flexible und/oder plastische Eigenschaften aufweist.

3. Optisches System (110) gemäß einem der vorhergehenden Ansprüche, **dadurch gekennzeichnet, dass** das mindestens eine Gehäuse (132) mindestens zwei planparallele Stirnflächen (136, 138) aufweist.

4. Optisches System (110) gemäß dem vorhergehenden Anspruch, **dadurch gekennzeichnet, dass** das Gehäuse (132) in einer Richtung senkrecht zu den planparallelen Stirnflächen (136, 138) längenänderbar ist.

5. Optisches System (110) gemäß einem der vorhergehenden Ansprüche, **dadurch gekennzeichnet, dass** das mindestens eine längenänderbare Gehäuse (132) mindestens einen Wellschlauch (134) aufweist.

6. Optisches System (110) gemäß einem der vorhergehenden Ansprüche, **dadurch gekennzeichnet, dass** das mindestens eine fluide Expansionsmedium (140) eine Flüssigkeit aufweist.

7. Optisches System (110) gemäß dem vorhergehenden Anspruch, **dadurch gekennzeichnet, dass** das Expansionsmedium (140) mindestens eines der folgenden Fluide aufweist: Wasser; einen Alkohol, insbesondere Ethanol.

8. Optisches System (110) gemäß einem der vorhergehenden Ansprüche, **gekennzeichnet durch** mindestens ein Temperierelement zur Einstellung und/oder Regelung mindestens einer Temperatur des mindestens einen fluiden Expansionsmediums (140).

## Claims

1. Optical system (110) having at least one camera system (112), in particular for use in the automobile sector, the at least one camera system (112) having at least one camera base (122), at least one imaging system (116) with at least one optical axis (128), in particular an objective, at least one imaging sensor (124) and at least one compensation element (130) for compensating at least one temperature-induced dimensional change in the camera system (112), the at least one compensation element (130) having at least one housing (132) of variable length in at least one dimension, as well as at least one fluid expansion medium (140) held in the at least one housing (132), it being possible to vary the length of the at least one housing (132) of variable length for the at least one compensation element (130) in a fashion parallel to the optical axis (128), **characterized in that** at least one imaging sensor (124) is connected to the at least one camera base (122) via the at least one compensation element (130).

2. Optical system (110) according to Claim 1,
**characterized in that** the at least one housing (132) of variable length has flexible and/or plastic properties in one dimension.

3. Optical system (110) according to one of the preceding claims, **characterized in that** the at least one housing (132) has at least two plane-parallel end faces (136, 138).

4. Optical system (110) according to the preceding claim, **characterized in that** the length of the housing (132) can be varied in a direction perpendicular to the plane-parallel end faces (136, 138).

5. Optical system (110) in accordance with one of the preceding claims, **characterized in that** the at least one housing (132) of variable length has at least one corrugated hose (134).

6. Optical system (110) in accordance with one of the preceding claims, **characterized in that** the at least one fluid expansion medium (140) has a liquid.

7. Optical system (110) in accordance with the preceding claim, **characterized in that** the expansion medium (140) has at least one of the following fluids: water; an alcohol, in particular ethanol.

8. Optical system (110) in accordance with one of the preceding claims, **characterized by** at least one temperature control element for setting and/or regulating at least one temperature of the at least one fluid expansion medium (140).

## Revendications

1. Système optique (110), présentant au moins un système de caméra (112), destiné notamment à être utilisé dans le secteur automobile, l'au moins un système de caméra (112) présentant au moins une base de caméra (122), au moins un système d'acquisition d'image (116) avec au moins un axe optique (128), notamment un objectif, au moins un capteur d'acquisition d'image (124) et au moins un élément de compensation (130) pour compenser au moins un changement de dimension lié à la température du système de caméra (112), l'au moins un élément de compensation (130) présentant au moins un boîtier (132) à longueur variable dans au moins une dimension ainsi qu'au moins un milieu d'expansion fluide (140) accueilli dans l'au moins un boîtier (132), l'au moins un boîtier (132) à longueur variable de l'au moins un élément de compensation (130) pouvant varier en longueur parallèlement à l'axe optique (128), **caractérisé en ce qu'**au moins un capteur d'acquisition d'image (124) est relié avec l'au moins une base de caméra (122) par le biais de l'au moins un élément de compensation (130).

2. Système optique (110) selon la revendication 1, **caractérisé en ce que** l'au moins un boîtier (132) à longueur variable présente dans une dimension des propriétés flexibles et/ou plastiques.

3. Système optique (110) selon l'une des revendications précédentes, **caractérisé en ce que** l'au moins un boîtier (132) présente au moins deux surfaces frontales (136, 138) planes et parallèles.

4. Système optique (110) selon la revendication précédente, **caractérisé en ce que** le boîtier (132) est à longueur variable dans une direction perpendiculaire aux surfaces frontales (136, 138) planes et parallèles.

5. Système optique (110) selon l'une des revendications précédentes, **caractérisé en ce que** l'au moins un boîtier (132) à longueur variable présente au moins un tuyau ondulé flexible (134).

6. Système optique (110) selon l'une des revendications précédentes, **caractérisé en ce que** l'au moins un milieu d'expansion fluide (140) présente un liquide.

7. Système optique (110) selon la revendication précédente, **caractérisé en ce que** le milieu d'expansion (140) présente au moins l'un des fluides suivants : de l'eau, un alcool, notamment de l'éthanol.

8. Système optique (110) selon l'une des revendications précédentes, **caractérisé par** au moins un élément d'équilibrage de la température pour régler et/ou réguler au moins une température de l'au moins un milieu d'expansion fluide (140).
